(19)

Europäisches
Patentamt

European
Patent Office

Office européen
des brevets

(11)  **EP 3 385 227 A1**

(12)  **EUROPEAN PATENT APPLICATION**

(43)  Date of publication:
**10.10.2018  Bulletin 2018/41**

(21)  Application number: **17189533.7**

(22)  Date of filing: **06.09.2017**

(51)  Int Cl.:
***C01G 53/04*** *(2006.01)*

(84)  Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30)  Priority:  **04.04.2017   KR 20170043612**

(71)  Applicant: **Laminar Co., Ltd.
Seongnam-si, Gyeonggi-do 13219 (KR)**

(72)  Inventors:
• **HONG, Jong Pal
13219 Dunchon-daero 457beon-gil,
Jungwon-gu, Seongnam-si, Gyeonggi-do, (KR)**

• **CHOI, Gyeong Rye
13219 Dunchon-daero 457beon-gil,
Jungwon-gu, Seongnam-si, Gyeonggi-do (KR)**
• **JO, Eun Ji
13219 Dunchon-daero 457beon-gil,
Jungwon-gu, Seongnam-si, Gyeonggi-do (KR)**
• **JONG, Myung Geun
13219 Dunchon-daero 457beon-gil,
Jungwon-gu, Seongnam-si, Gyeonggi-do (KR)**

(74)  Representative: **Rau, Schneck & Hübner
Patentanwälte Rechtsanwälte PartGmbB
Königstraße 2
90402 Nürnberg (DE)**

(54)  **MANUFACTURING METHOD OF CATHODE ACTIVE MATERIAL FOR SECONDARY CELL**

(57)    The present invention relates to a method of preparing a positive electrode active material precursor for secondary batteries which allows maintenance of the crystallinity of an obtained positive electrode active material precursor at a high level while allowing control of a particle diameter of the positive electrode active material precursor. More particularly, the method of preparing a positive electrode active material precursor for secondary batteries includes (1) a preparation step of preparing a continuous-type reactor that includes a non-rotatable cylinder, inside which a reaction chamber is included; a stirring motor disposed at one side of the non-rotatable cylinder; a stirring rod that is coupled with a motor shaft of the stirring motor and is embedded inside the reaction chamber while being spaced from a wall of the reaction chamber; and a pH sensor for measuring pH inside the reaction chamber;(2) a gap adjustment step of adjusting a gap that is an interval between an outer surface of the stirring rod and an inner surface of the non-rotatable cylinder to be proportional to an average particle diameter of a positive electrode active material precursor to be obtained; and (3)a reaction step of supplying a metal solution and an alkaline solution for precipitation of the metal solution, to constitute the positive electrode active material precursor to be obtained, into the reaction chamber while rotating the stirring rod of the gap-adjusted continuous-type reactor, and allowing reaction for 30 minutes to 24 hours while maintaining pH inside the reaction chamber at 10.5 to 12.8.

EP 3 385 227 A1

**Description**

Technical Field

The present invention relates to a method of preparing a positive electrode active material precursor for secondary batteries, more particularly to a method of preparing a positive electrode active material precursor for secondary batteries which allows maintenance of the crystallinity of an obtained positive electrode active material precursor to a high level while allowing control of a particle diameter of the positive electrode active material precursor.

Background Art

Batteries are defined as a system that directly converts chemical energy of an electrode material into electrical energy using an electrochemical reaction. There among, batteries which can be charged and discharged twice and used several times are called secondary batteries. Commercialization of secondary batteries began with commercialization of lead storage batteries in 1859. Nickel cadmium and a nickel hydrogen battery were developed in 1948 and 1990, respectively, and have been applied to cassettes, CD players, cameras, notebooks, and the like. However, conventional secondary batteries have a limitation in that an environmental pollution problem is caused by heavy metals contained in an electrode material and application thereof is limited due to low energy density. To address such problems, a lithium secondary battery was developed by Sony, Japan in the early 1990s.

A lithium secondary battery is a secondary battery wherein lithium ions are charged and discharged through insertion and desorption while reciprocating between a negative electrode, an electrolyte, and a positive electrode. A transition metal oxide or the like may be used as a positive electrode active material, graphite or the like may be used as a negative electrode active material, and a lithium salt, particularly lithium fluoride, may be used as an electrolyte.

A lithium secondary battery has a three-fold higher operating voltage compared to conventional nickel-hydrogen batteries and also exhibits improved energy density. Accordingly, research into application thereof to automobiles and medium to large power storage devices is underway. Although a lithium secondary battery is composed of more than 10 components, main materials thereof are a positive electrode, negative electrode, an electrolyte, and a separator, which are known as the four core materials of a lithium secondary battery. In general, a transition metal oxide is mainly used for a positive electrode, and a carbon-based material is used as a negative electrode. An electrolyte is composed of an organic material in which a lithium salt is dissolved, and a separator is made of porous polyethylene or polypropylene.

The secondary battery positive electrode material market can be broadly divided into LCO(LiCoO2)-based positive electrode materials and NMC(NixCoyMnzO2)-based positive electrodes. Recently, research into application of NMC-based positive electrode materials to batteries for energy storage and automobiles is underway. Accordingly, research into production of NMC-based positive electrode materials which are cheap and have improved performance is actively underway. To accomplish this, manufacturers have developed various NMC production methods. However, most processes, except for a co-precipitation process, have failed to be commercialized. For example, in the case of a low-temperature solid-phase reaction method, it is difficult to properly control particle shape. In addition, in the case of a high-temperature solid-state reaction method, low crystallinity causes low electrical properties. In addition, in the cases of a sol-gel method and a spray pyrolysis method, there are problems such as low production efficiency and high cost. In contrast, a co-injection process has an advantage in that high production efficiency may be accomplished at low cost. This co-precipitation reaction method is characterized by adding a metal solution, aqueous ammonia, and a NaOH solution to a reactor and allowing reaction at an appropriate pH (about 11) such that a complex compound of the aqueous ammonia and the metal solution is formed, followed by reacting the complex compound with NaOH such that precipitation occurs. After precipitation, crystals grow. A precursor produced by the co-precipitation process can be used as a positive electrode material after calcination with lithium carbonate ($Li_2CO_3$) in an oxygen atmosphere at about 900°C.

Korean Patent No. 10-1564009, entitled "CONTINUOUSLY PREPARING METHOD FOR NI-CO-MN COMPOSITE PRECURSOR USING COUETTE-TAYLOR VORTEX REACTOR," discloses a method of continuously preparing a nickel-cobalt-manganese composite precursor, $Ni_xCo_yMn_{1-x-y}(OH)_2$, which is used as a mixture with lithium in nickel secondary batteries and used as a positive electrode active material. In particular, Korean Patent No. 10-1564009 discloses that a $Ni_xCo_yMn_{1-x-y}(OH)_2$ precursor seed is prepared in a Couette-Taylor reactor through a first co-precipitation reaction, and the $Ni_xCo_yMn_{1-x-y}(OH)_2$ precursor seed is fed with a metallic co-precipitation solution into a batch-type reactor equipped with an overflow such that a secondary co-precipitation reaction occurs, whereby a $Ni_xCo_yMn_{1-x-y}(OH)_2$ precursor, which is uniform and has high sphericity, the crystallinity of which is high, and the size of which is about 3 to 4 $\mu$m, is finally prepared. However, this process is complex due to co-precipitation reaction performed twice and the like, and a precursor, a size range of particles of which is limited, may be produced.

Korean Patent No. 10-1092337 discloses "an all-in-one type continuous reactor for preparing a positive electrode active material of lithium secondary battery and a crystal separation device including the same," the all-in-one type continuous reactor including a non-rotatable cylinder, in which a reaction chamber is included,; a stirring motor disposed at one side of the non-rotatable cylinder; and a stirring rod that is coupled with a motor shaft of the stirring motor, is embedded in the reaction chamber to be spaced from a wall of the reaction chamber, wherein a flange part is formed at one side of the non-rotatable cylinder, one or more reactant injection ports, which are formed to be connected to the reaction chamber on the flange part and thus into which a reactant is injected, and a reaction product exhaust port, which is formed to be connected to the reaction chamber at another side of the non-rotatable cylinder and thus from which the reaction product is discharged, wherein a plurality of extra ports formed to be connected to the reaction chamber is further included between the reactant injection ports of the non-rotatable cylinder and the reaction product exhaust port of the non-rotatable cylinder; a temperature regulator is included between an outer peripheral surface and an inner peripheral surface of the non-rotatable cylinder, the temperature regulator constituting of an annular refrigerant chamber and the refrigerant chamber is filled with a refrigerant filled; a particle pulverizer, which is installed on a flow path of the reactant injection port and pulverizes particles of a reactant injected via the reactant injection port, is further included; and a flow rate sensor, which is installed at any one of the reactant injection port, the reaction product exhaust port, and the extra ports and senses the flow rate of a reactant, and a flow rate controller, which controls the flow rate of a reactant introduced via the reactant injection port based on sensed flow rate data fed back by the flow rate sensor, are further included.

However, a method of preparing a positive electrode active material precursor for secondary batteries which allows maintenance of the crystallinity of a positive electrode active material precursor at a high level while controlling the particle diameter of the positive electrode active material precursor has yet to be developed.

Therefore, there is an urgent need for a method of preparing a positive electrode active material precursor for secondary batteries which allows maintenance of the crystallinity of a positive electrode active material precursor at a high level while controlling the particle diameter of the positive electrode active material precursor.

Technical Problem

Therefore, the present invention has been made in view of the above problems, and it is one object of the present invention to provide a method of preparing a positive electrode active material precursor for secondary batteries which allows maintenance of the crystallinity of a positive electrode active material precursor at a high level while controlling the particle diameter of the positive electrode active material precursor.

Technical Solution

In accordance with one aspect of the present invention, provided is a method of preparing a positive electrode active material precursor for secondary batteries, the method including: (1) a preparation step of preparing a continuous-type reactor that includes a non-rotatable cylinder, inside which a reaction chamber is included; a stirring motor disposed at one side of the non-rotatable cylinder; a stirring rod that is coupled with a motor shaft of the stirring motor and is embedded inside the reaction chamber while being spaced from a wall of the reaction chamber; and a pH sensor for measuring pH inside the reaction chamber;(2) a gap adjustment step of adjusting a gap that is an interval between an outer surface of the stirring rod and an inner surface of the non-rotatable cylinder to be proportional to an average particle diameter of a positive electrode active material precursor to be obtained; and (3)a reaction step of supplying a metal solution and an alkaline solution for precipitation of the metal solution, to constitute the positive electrode active material precursor to be obtained, into the reaction chamber while rotating the stirring rod of the gap-adjusted continuous-type reactor, and allowing reaction for 30 minutes to 24 hours while maintaining pH inside the reaction chamber at 10.5 to 12.8.

A solvent of the metal solution and the alkaline solution may be an aqueous solvent.

A solvent of the metal solution and the alkaline solution may be water.

The metal solution may be an aqueous metal salt solution selected from the group consisting of nickel (Ni), manganese (Mn), cobalt (Co), aluminum (Al), and a mixture of two or more thereof.

The alkaline solution may be an aqueous sodium hydroxide solution, aqueous ammonia, or a mixture thereof.

A rotation speed of the stirring rod may be 10 to 3000rpm.

Advantageous effects

As apparent from the above description, the present invention provides a method of preparing a positive electrode active material precursor for secondary batteries which allows maintenance of the crystallinity of an obtained positive electrode active material precursor at a high level while allowing control of a particle diameter of the positive electrode active material precursor is provided. Accordingly, a secondary battery having suitable electrochemical characteristics depending upon desired use of the secondary battery may be manufactured.

Description of Drawings

FIG. 1 is a sectional view schematically illustrating an embodiment of a continuous-type reactor suitable for preparation of a positive electrode active material precursor for secondary batteries according to the present invention.

FIGS. 2 to 5 illustrate scanning electron microscope images of positive electrode active material precursors for secondary batteries obtained varying gaps according to Examples 1 to 4 of the present invention.

FIG. 6 illustrates a scanning electron microscope image of a positive electrode active material precursor for secondary batteries obtained according to Comparative Example 1, provided for comparison with the examples of the present invention.

FIG. 7 illustrates a scanning electron microscope image of a positive electrode active material precursor for secondary batteries obtained according to Comparative Example 2, provided for comparison with the examples of the present invention.

FIGS. 8 and 9 illustrate scanning electron microscope images of positive electrode active material precursors for secondary batteries obtained, varying reaction time, according to Example 5 of the present invention(FIG. 8) and a graph of a particle size analysis result thereof (FIG. 9).

FIGS. 10 and 11 illustrate scanning electron microscope images of positive electrode active material precursors for secondary batteries obtained, varying a rotation speed of a stirring rod, according to Example 6 of the present invention(FIG. 10) and a graph of a particle size analysis result thereof (FIG. 11).

FIGS. 12 and 13 illustrate scanning electron microscope images of positive electrode active material precursors for secondary batteries obtained, varying a supply speed of aqueous ammonia, according to Example 7 of the present invention(FIG. 12) and a graph of a particle size analysis result thereof (FIG. 13).

FIGS. 14 and 15 illustrate scanning electron microscope images of positive electrode active material precursors for secondary batteries obtained, varying pH, according to Example 8 of the present invention(FIG. 14) and a graph of a particle size analysis result thereof (FIG. 15).

Best mode

Hereinafter, embodiments of the present invention are described in detail with reference to the accompanying drawings.

A method of preparing a positive electrode active material precursor for secondary batteries according to the present invention includes (1) a preparation step of preparing a continuous-type reactor that includes a non-rotatable cylinder, inside which a reaction chamber is included; a stirring motor disposed at one side of the non-rotatable cylinder; a stirring rod that is coupled with a motor shaft of the stirring motor and is embedded inside the reaction chamber while being spaced from a wall of the reaction chamber; and a pH sensor for measuring pH inside the reaction chamber; (2) a gap adjustment step of adjusting a gap that is an interval between an outer surface of the stirring rod and an inner surface of the non-rotatable cylinder to be proportional to an average particle diameter of a positive electrode active material precursor to be obtained; and (3) a reaction step of supplying a metal solution and an alkaline solution for precipitation of the metal solution, to constitute the positive electrode active material precursor to be obtained, into the reaction chamber while rotating the stirring rod of the gap-adjusted continuous-type reactor, and allowing reaction for 30 minutes to 24 hours while maintaining pH inside the reaction chamber at 10.5 to 12.8.

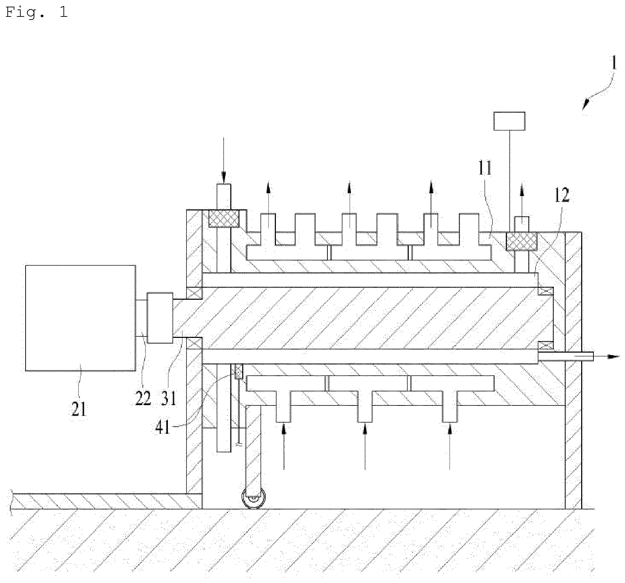

The preparation step is a preparation step of preparing a continuous-type reactor suitable for production of the positive electrode active material precursor for secondary batteries according to the present invention. Here, a continuous-type reactor1 may be a continuous-type reactor including a non-rotatable cylinder 11, inside which a reaction chamber 12 is included; a stirring motor 21 disposed at one side of the non-rotatable cylinder 11; a stirring rod 31 that is coupled with a motor shaft 22 of the stirring motor 21 and is embedded inside the reaction chamber 12 while being spaced from a wall of the reaction chamber 12; and a pH sensor 41 for measuring pH inside the reaction chamber, as illustrated in FIG. 1. In particular, the continuous-type reactor 1 may include a plurality of the stirring rod 31 having different diameters suitable for adjustment of an interval between an outer surface of the stirring rod 31 and an inner surface of the non-rotatable cylinder 11, i.e., a gap, in a gap control step described below. To accomplish this, the stirring rod 31 is preferably, detachably coupled with the non-rotatable cylinder 11. However, the present invention is not intended to be limited thereto, and it should be understood that the interval between an outer surface of the stirring rod and an inner surface of the non-rotatable cylinder may be adjusted by controlling an inner diameter of the non-rotatable cylinder or adjusting an inner diameter of the non-rotatable cylinder and an outer diameter of the stirring rod together.

The gap adjustment step may be carried out by adjusting an interval, i.e., a gap, between an outer surface of the stirring rod and an inner surface of the non-rotatable cylinder to be proportional to an average particle diameter of a positive electrode active material precursor to be obtained. As described above, an interval, i.e., a gap, between an outer surface of the stirring rod and an inner surface of the non-rotatable cylinder may be adjusted by controlling an inner diameter of the non-rotatable cylinder, an outer diameter of the stirring rod, or the inner diameter of the non-rotatable cylinder and the outer diameter of the stirring rod together. The gap adjustment may serve as a key parameter in the method of preparing a positive electrode active material precursor for secondary batteries according to the present invention, particularly as a main parameter for control of a particle diameter of a positive electrode active material precursor to be obtained.

There action step is carried out by supplying a metal solution and an alkaline solution for precipitation of the metal solution, to constitute the positive electrode active material precursor to be obtained, into the reaction chamber while rotating the stirring rod of the gap-adjusted continuous-type reactor, and allowing reaction for 30 minutes to 24 hours while maintaining pH inside the reaction chamber at 10.5 to 12.8, as described above. In particular, a spherical positive electrode active material precursor crystal may be obtained by adjusting the interval, i.e., a gap, between an outer surface of the stirring rod and an inner surface of the non-rotatable cylinder within a range of 1 to 30 mm. When the gap is less than 1mm, a particle size of an obtained positive electrode active material precursor is too small and agitation force excessively increases, thereby negatively affecting driving of the continuous-type reactor. On the other hand, when the gap is greater than 30 mm, agitation force is excessively decreased, whereby a particle diameter of an obtained positive electrode active material precursor excessively increases or coagulation is not satisfactorily performed. Accordingly, sphericity and crystallinity are decreased, whereby it may be difficult to prepare a positive electrode active material.

A solvent of the metal solution and the alkaline solution may be an aqueous solvent, preferably water. Selection of a suitable solvent is important in preparing the metal solution and the alkaline solution. In particular, the viscosity of a solvent or the like may be a main parameter greatly affecting Taylor vortex formation in a continuous-type reactor.

The metal solution may be an aqueous metal salt solution selected from the group consisting of nickel (Ni), manganese (Mn), cobalt (Co), aluminum (Al), and a mixture of two or more thereof. By selecting a suitable one from among these metal solutions and combinations thereof, various positive electrode active materials may be prepared. That is, to prepare a ternary positive electrode active material, for example, a combination of nickel-manganese-cobalt, a combination of nickel-cobalt-aluminum, or the like may be used. Meanwhile, to prepare a quaternary positive electrode active material, for example, a combination of nickel-manganese-cobalt-aluminum may be used. It should be understood that other metals and combinations thereof, other than these exemplary combinations, may be used.

The alkaline solution may be an aqueous sodium hydroxide solution, aqueous ammonia, or a mixture thereof. In particular, an aqueous sodium hydroxide solution among alkaline solutions may be supplied, varying a supply amount of the aqueous sodium hydroxide solution such that the pH inside the reaction chamber is maintained within a predetermined range suitable for co-precipitation, into the reaction chamber reaction chamber.

A rotation speed of the stirring rod may be maintained within a range of 10 to 3000 rpm. When a rotation speed of the stirring rod is greater than 3000 rpm, turbulence may occur and thus Taylor flow may be destroyed or disappear.

Hereinafter, preferred examples and comparative examples of the present invention are described.

The following examples are provided for illustrative purposes only and should not be construed as limiting the scope and spirit of the present invention.

Example 1

Preparing a continuous-type reactor that includes a non-rotatable cylinder, inside which a reaction chamber is included; a stirring motor disposed at one side of the non-rotatable cylinder; a stirring rod that is coupled with a motor shaft of the stirring motor and is embedded inside the reaction chamber while being spaced from a wall of the reaction chamber and adjusting a gap that is an interval between an outer surface of the stirring rod and an inner surface of the non-rotatable cylinder to 5 mm. Subsequently, to prepare a positive electrode active material precursor, $NiSO_4 \cdot 6H_2O$, $CoSO_4 \cdot 7H_2O$, and $MnSO_4 \cdot H_2O$ were mixed in a molar ratio of 1 : 1 : 1 in the reaction chamber while rotating the stirring rod of the gap-adjusted continuous-type reactor, distilled water was added thereto to prepare a 2M solution, and the prepared 2M solution was supplied to the reaction chamber at a rate of 1.98 ml/min. At the same time, a 14% ammonium hydroxide solution was added to the reaction chamber at a rate of 0.2 ml/min and a 4M sodium hydroxide solution was supplied thereto. Here, a supply speed of the 4M sodium hydroxide was set to be controlled so as to maintain the pH of the whole solution in the reaction chamber at pH 11, a rotation speed of the stirring rod was set to 1300rpm, and a reaction time in the reaction chamber, i.e., a time taken until a solution injected through an injection port was discharged via a discharge part as much as the capacity of the reaction chamber (10 L basis) (time during which one batch stays = reaction time = 1τ), was 4 hours. Accordingly, a positive electrode active material precursor for secondary batteries was obtained. Here, reaction temperature inside the reaction chamber was set to 50°C.

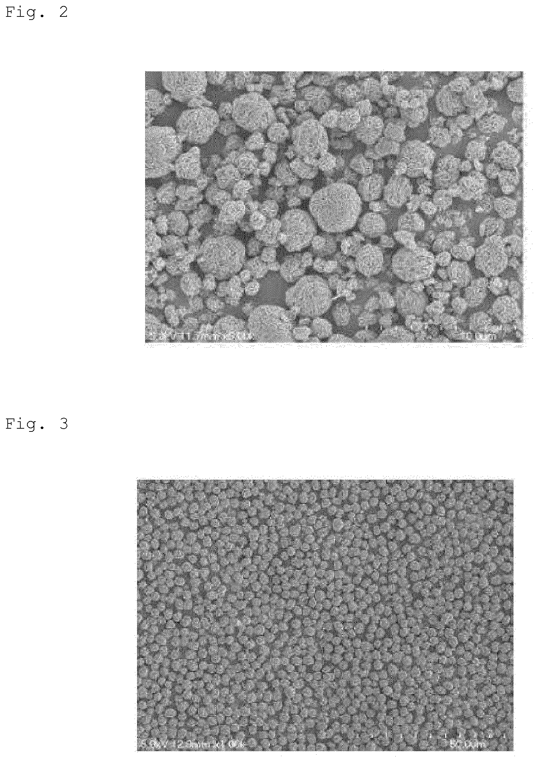

As a result, an average particle diameter of the positive electrode active material precursor for secondary batteries was 1.9 μm, and spherical crystalline particles were observed as illustrated in a scanning electron microscope (SEM) image thereof (FIG. 2).

Example 2

An experiment was carried out in the same manner as in Example 1, except that the gap was adjusted 9 mm to instead of 5 mm.

As a result, an average particle diameter of an obtained positive electrode active material precursor for secondary batteries was 4.0$\mu$m, and spherical crystalline particles were observed as illustrated in a scanning electron microscope (SEM) image thereof (FIG. 3).

Example 3

An experiment was carried out in the same manner as in Example 1, except that the gap was adjusted 14 mm to instead of 5 mm.

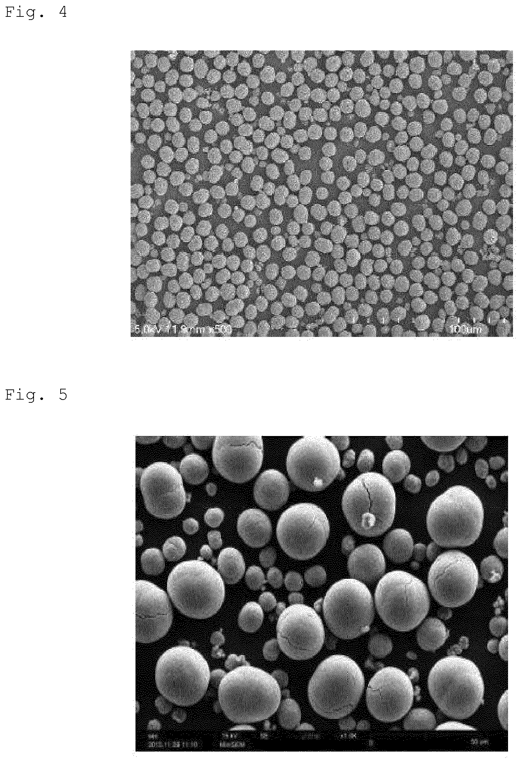

As a result, an average particle diameter of an obtained positive electrode active material precursor for secondary batteries was 10.0 $\mu$m, and spherical crystalline particles were observed as illustrated in a scanning electron microscope (SEM) image thereof (FIG. 4).

Example 4

An experiment was carried out in the same manner as in Example 1, except that the gap was adjusted 26 mm to instead of 5 mm.

As a result, an average particle diameter of an obtained positive electrode active material precursor for secondary batteries was 20.0 $\mu$m, and spherical crystalline particles were observed as illustrated in a scanning electron microscope (SEM) image thereof (FIG. 5).

Comparative Example 1

An experiment was carried out in the same manner as in Example 1, except that the gap was adjusted 37 mm to instead of 5 mm.

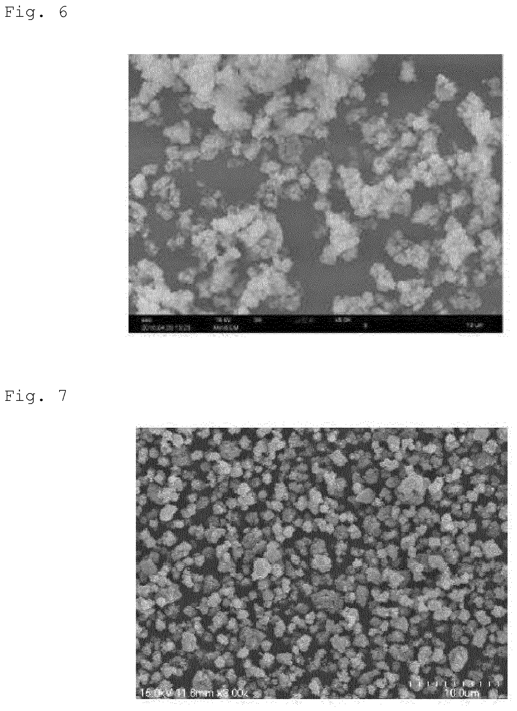

An obtained positive electrode active material precursor for secondary batteries was not coagulated, whereby it was difficult to measure an average particle diameter thereof. Referring to a scanning electron microscope (SEM) image thereof (FIG. 6), it can be confirmed that coagulation is not satisfactorily performed and crystallinity is not exhibited.

Comparative Example 2

An experiment was carried out in the same manner as in Example 1, except that the gap was adjusted 1 mm to instead of 5 mm.

Referring to FIG. 7, it can be confirmed that an obtained positive electrode active material precursor for secondary batteries tends to coagulate, but spherical particles are not satisfactorily formed and the particles tend to be destroyed due to collision among the particles.

Example 5

An experiment was carried out in the same manner as in Example 1, except that the gap was constantly fixed to 9 mm, a 14% ammonium hydroxide solution was fed into a reaction chamber at a rate of 0.6 ml/min, and a 4M sodium hydroxide solution was supplied thereto. Here, the capacity of the reaction chamber was 1 L and reaction time was set to four hours and seven hours.

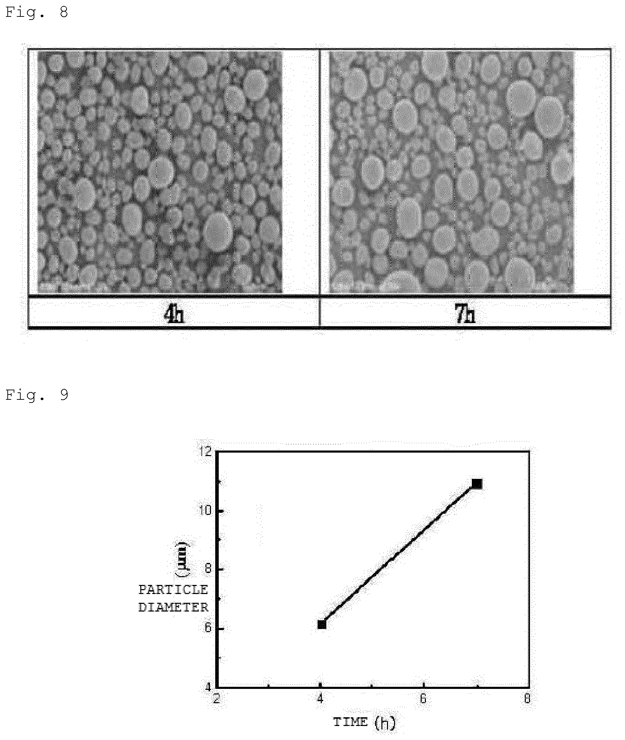

Referring to a scanning electron microscope (SEM) image (FIG. 8) and a graph (FIG. 9), it can be confirmed that a particle diameter of an obtained positive electrode active material precursor for secondary batteries increases proportionally with increasing reaction time.

Example 6

An experiment was carried out in the same manner as in Example 1, except that the capacity of the reaction chamber was 1L, the gap was constantly fixed to 9 mm, a 14% ammonium hydroxide solution was supplied to the reaction chamber at a rate of 0.6 ml/min, and a rotation speed (i.e., stirring speed) of the stirring rod was 300 to 1500 rpm.

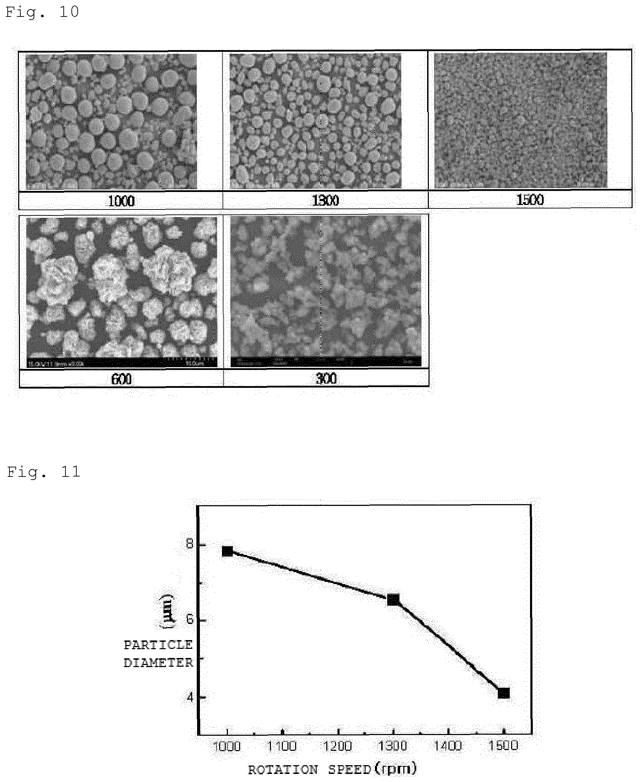

Referring to a scanning electron microscope (SEM) image (FIG. 10) and a graph (FIG. 11), it can be confirmed that a particle diameter of an obtained positive electrode active material precursor for secondary batteries decreases with increasing stirring speed, and, when the stirring speed is lower than a proper rpm range, particle shapes are poor and agglomeration into a spherical shape is not satisfactorily performed.

Example 7

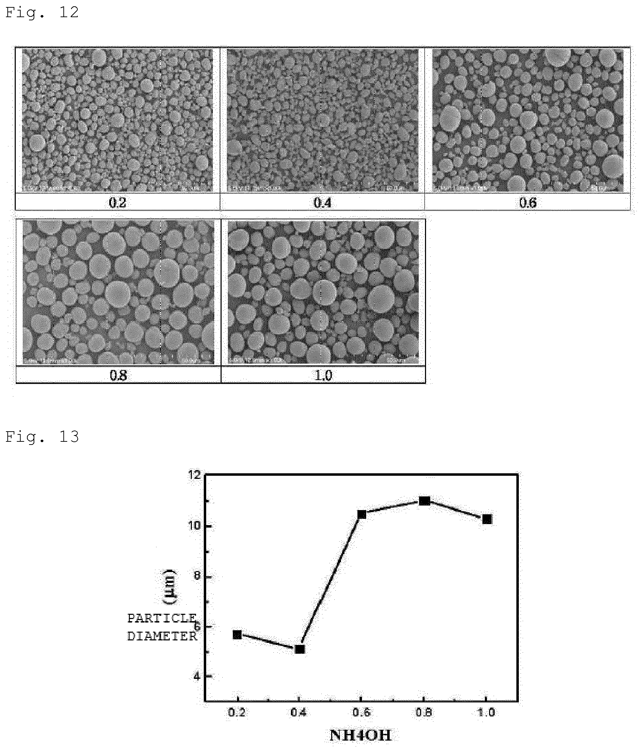

An experiment was carried out in the same manner as in Example 1, except that the capacity of the reaction chamber was 1 L, the gap was constantly fixed to 9 mm, and a supply speed of a 14% ammonium hydroxide solution into the reaction chamber was changed.
Referring to a scanning electron microscope (SEM) image (FIG. 12) and a graph (FIG. 13), it can be confirmed that a particle diameter of an obtained positive electrode active material precursor for secondary batteries increases with increasing supply flow rate of the 14% ammonium hydroxide solution.

Example 8

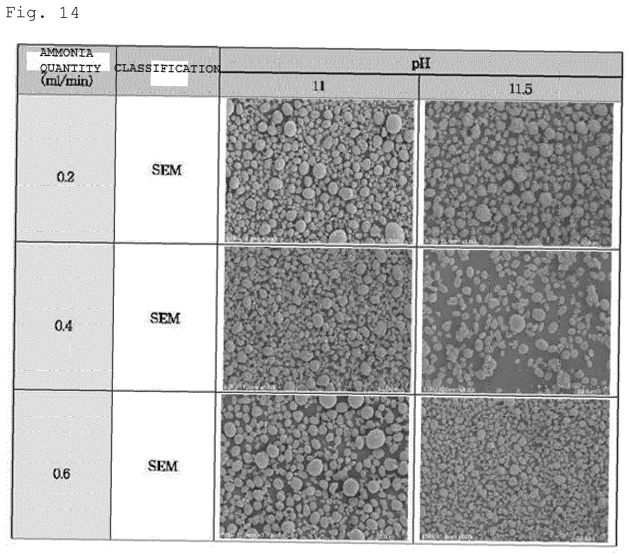

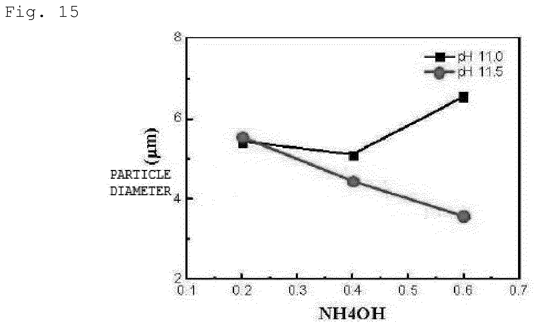

An experiment was carried out in the same manner as in Example 1, except that the capacity of the reaction chamber was 1 L, the gap was constantly fixed to 9 mm, and the pH of the whole solution in the reaction chamber was differently set to 11 and 11.5 by adjusting a supply speed of a 4M sodium hydroxide solution while varying a supply flow rate of a 14% ammonium hydroxide solution supplied to the reaction chamber.
Referring to a scanning electron microscope (SEM) image (FIG. 14) and a graph (FIG. 15), it can be confirmed that particle surfaces of an obtained positive electrode active material precursor for secondary batteries became rough and, when the supply flow rate of the ammonium hydroxide solution was greater than 0.6 ml/min, pH greatly affected a particle size thereof. Accordingly, it can be confirmed that there is an appropriate pH range for each supply flow rate of the ammonium hydroxide solution.
In particular, with regard to the rotation speed of the stirring rod in Examples 1 to 8, an internal volume of the reaction chamber of Examples 1 to 4 was based on 10L, whereas the internal volume of the reaction chamber of Examples 5 to 8 was based on 1 L. Here, the rotation speed of the stirring rod was experimentally determined. Accordingly, it was confirmed that the rotation speed of the stirring rod might be optimally controlled depending upon the internal volume of the reaction chamber.
That is, it was confirmed that Taylor No. might be calculated according to Mathematical Equation 1 below, and identical or similar Taylor No. might be formed inside the reaction chamber by utilizing the calculated Taylor No., whereby an identical or similar reaction condition might be set:

$$T_a = \left(\frac{d}{r_i}\right)^{1/2} \frac{\omega r_i d}{v}$$

Mathematical Equation 1

,

wherein Ta represents Taylor No., d represents a distance (m) between an outer surface of a stirring rod and an inner surface of a reaction chamber, $r_i$ represents the radius (m) of a stirring rod, $\omega$ represents the angular velocity (rad/s) of a stirring rod, and $v$ represents kinematic viscosity (m$^2$/s).
Using Mathematical Equation 1, the rotation speed of the stirring rod was calculated to obtain similar Taylor No. (based on Taylor No. of about 15,000) for each volume of the reaction chambers, and results are summarized in Table 1 below. Here, the kinematic viscosity was based on water, and the kinematic viscosity of water was 1.003 at 20°C:

Table 1

| Reactor volume | Rotation speed (rpm) Of stirring rod | Taylor No. |
|---|---|---|
| 1 L | 1300 | 14663.43 |
| 10 L | 204 | 14697.27 |
| 1000 L | 8.7 | 14674.72 |

In conclusion, a positive electrode active material precursor for secondary batteries obtained according to the present invention may have relatively high uniformity and sphericity while having various particle diameters due to adjustment of various parameters of the continuous-type reactor, i.e., an interval (i.e., a gap) between an outer surface of the stirring rod and an inner surface of the non-rotatable cylinder, residence time, the rotation speed of the stirring rod, reaction time, and the like, or a combination of two or more thereof.

The aforementioned description is provided only to illustrate embodiments according to the present invention. Those skilled in the art will appreciate that various modifications, additions and substitutions are possible, without departing from the scope and spirit of the invention. Therefore, it is obvious that the modifications, additions and substitutions are included in the scope of the present invention.

Description of Symbols

    1: CONTINUOUS-TYPE REACTOR
    11: CYLINDER
    12: REACTION CHAMBER
    21: STIRRING MOTOR
    22: MOTOR SHAFT
    31: STIRRING ROD
    41: PH SENSOR

**Claims**

1.   A method of preparing a positive electrode active material precursor for secondary batteries, the method comprising:

    (1) a preparation step of preparing a continuous-type reactor that comprises a non-rotatable cylinder, inside which a reaction chamber is comprised; a stirring motor disposed at one side of the non-rotatable cylinder; a stirring rod that is coupled with a motor shaft of the stirring motor and is embedded inside the reaction chamber while being spaced from a wall of the reaction chamber; and a pH sensor for measuring pH inside the reaction chamber;
    (2) a gap adjustment step of adjusting a gap that is an interval between an outer surface of the stirring rod and an inner surface of the non-rotatable cylinder to be proportional to an average particle diameter of a positive electrode active material precursor to be obtained; and
    (3) a reaction step of supplying a metal solution and an alkaline solution for precipitation of the metal solution, to constitute the positive electrode active material precursor to be obtained, into the reaction chamber while rotating the stirring rod of the gap-adjusted continuous-type reactor, and allowing reaction for 30 minutes to 24 hours while maintaining pH inside the reaction chamber at 10.5 to 12.8.

2.   The method according to claim 1, wherein a solvent of the metal solution and the alkaline solution is an aqueous solvent.

3.   The method according to claim 2, wherein a solvent of the metal solution and the alkaline solution is water.

4.   The method according to claim 1, wherein the metal solution is an aqueous metal salt solution selected from the group consisting of nickel (Ni), manganese (Mn), cobalt (Co), aluminum (Al), and a mixture of two or more thereof.

5.   The method according to claim 1, wherein the alkaline solution is an aqueous sodium hydroxide solution, aqueous ammonia, or a mixture thereof.

6.   The method according to claim 1, wherein a rotation speed of the stirring rod is 10 to 3000rpm.

Fig. 1

Fig. 2

Fig. 3

Fig. 4

Fig. 5

Fig. 6

Fig. 7

Fig. 8

| 4h | 7h |

Fig. 9

Fig. 10

Fig. 11

Fig. 12

Fig. 13

Fig. 14

| AMMONIA QUANTITY (ml/min) | CLASSIFICATION | pH | |
|---|---|---|---|
| | | 11 | 11.5 |
| 0.2 | SEM | | |
| 0.4 | SEM | | |
| 0.6 | SEM | | |

Fig. 15

Europäisches
Patentamt

European
Patent Office

Office européen
des brevets

# EUROPEAN SEARCH REPORT

Application Number

EP 17 18 9533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/234203 A1 (PARK BYUNGCHUN [KR] ET AL) 21 August 2014 (2014-08-21) | 1-6 | INV.<br>C01G53/04 |
| Y | * page 5, column 1; example 1 *<br>* page 5, column 1, paragraph [0084] *<br>* figure 1 * | 1-6 | |
| X | EP 2 910 300 A1 (LAMINAR CO LTD [KR]; KOREA RES INST CHEM TECH [KR]) 26 August 2015 (2015-08-26)<br>* page 7, paragraph [0058] - page 8, paragraph [0067]; figure 5 * | 1-6 | |
| Y | EP 2 735 366 A1 (LAMINAR CO LTD [KR]) 28 May 2014 (2014-05-28)<br>* claims 1-4; figure 2 * | 1-6 | |
| Y | WO 2015/122554 A1 (E & D CO LTD [KR]) 20 August 2015 (2015-08-20)<br>* figure 1; example 1 * | 1-6 | |
| Y | HENGZHONG ZHANG ET AL: "Particle Size and pH Effects on Nanoparticle Dissolution", JOURNAL OF PHYSICAL CHEMISTRY C, vol. 114, no. 35, 19 August 2010 (2010-08-19), pages 14876-14884, XP055448028, US ISSN: 1932-7447, DOI: 10.1021/jp1060842<br>* the whole document * | 1-6 | TECHNICAL FIELDS SEARCHED (IPC)<br><br>C01G |

The present search report has been drawn up for all claims

| Place of search | Date of completion of the search | Examiner |
|---|---|---|
| Munich | 6 February 2018 | Timmermans, Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 9533

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2018

| Patent document cited in search report | Publication date | Patent family member(s) | Publication date |
|---|---|---|---|
| US 2014234203 A1 | 21-08-2014 | CN 103945934 A | 23-07-2014 |
| | | EP 2810706 A1 | 10-12-2014 |
| | | JP 5921705 B2 | 24-05-2016 |
| | | JP 2015506051 A | 26-02-2015 |
| | | KR 20130089138 A | 09-08-2013 |
| | | TW 201332644 A | 16-08-2013 |
| | | US 2014234203 A1 | 21-08-2014 |
| | | US 2016164090 A1 | 09-06-2016 |
| | | WO 2013115446 A1 | 08-08-2013 |
| EP 2910300 A1 | 26-08-2015 | EP 2910300 A1 | 26-08-2015 |
| | | JP 6257636 B2 | 10-01-2018 |
| | | JP 2016501705 A | 21-01-2016 |
| | | US 2015258524 A1 | 17-09-2015 |
| | | WO 2014084547 A1 | 05-06-2014 |
| EP 2735366 A1 | 28-05-2014 | EP 2735366 A1 | 28-05-2014 |
| | | JP 5714708 B2 | 07-05-2015 |
| | | JP 2013539176 A | 17-10-2013 |
| | | KR 101092337 B1 | 09-12-2011 |
| | | US 2014147338 A1 | 29-05-2014 |
| | | WO 2013012147 A1 | 24-01-2013 |
| WO 2015122554 A1 | 20-08-2015 | CN 106029575 A | 12-10-2016 |
| | | KR 20150095428 A | 21-08-2015 |
| | | WO 2015122554 A1 | 20-08-2015 |

EPO FORM P0459

For more details about this annex : see Official Journal of the European Patent Office, No. 12/82

**REFERENCES CITED IN THE DESCRIPTION**

**Patent documents cited in the description**

- KR 101564009
- KR 101092337